# EUROPEAN PATENT APPLICATION

(11) **EP 1 293 900 A2**
(43) Date of publication of application: **19.03.2003**
(21) Application number: 02016466.1
(22) Date of filing: 23.07.2002
(51) Int. Cl.: G06F 9/46

(54) **External event processor system and method**

(30) Priority: 12.09.2001 US 952779
(71) Applicant: ALCATEL, 75008 Paris (FR)
(72) Inventor: Johnson, Paul A., Plano, TX 75075-7439 (US)
(74) Representative: Dreiss, Fuhlendorf, Steimle & Becker

(57) **Abstract**

An **External Event Processor** (EEP) system and method incorporating a separate software component that permits reformatting of received events and transportation of these events to previously registered event consumers is disclosed. The present invention teaches creation of a separate software component to handle event processing and transportation, running within a separate software process. This separate software process has a remote interface utilized by a Network Management application to send events in their most basic form to the External Event Processor (EEP). Subsequently, the EEP performs all other functions that are necessary to convert the supplied even to the proper form and type required by the external event consumers. In addition, the EEP provides the event with Quality of Service (QoS) properties required by external consumers.

## Description

### Field of the Invention

The present invention is related in the general area of network and distributed **Element Management Systems (EMS)** and software techniques that may be used to minimize the maintenance overhead of EMS when responding to changes in network protocols and/or incorporation of new/modified network elements (NE).

### Overview (0100)

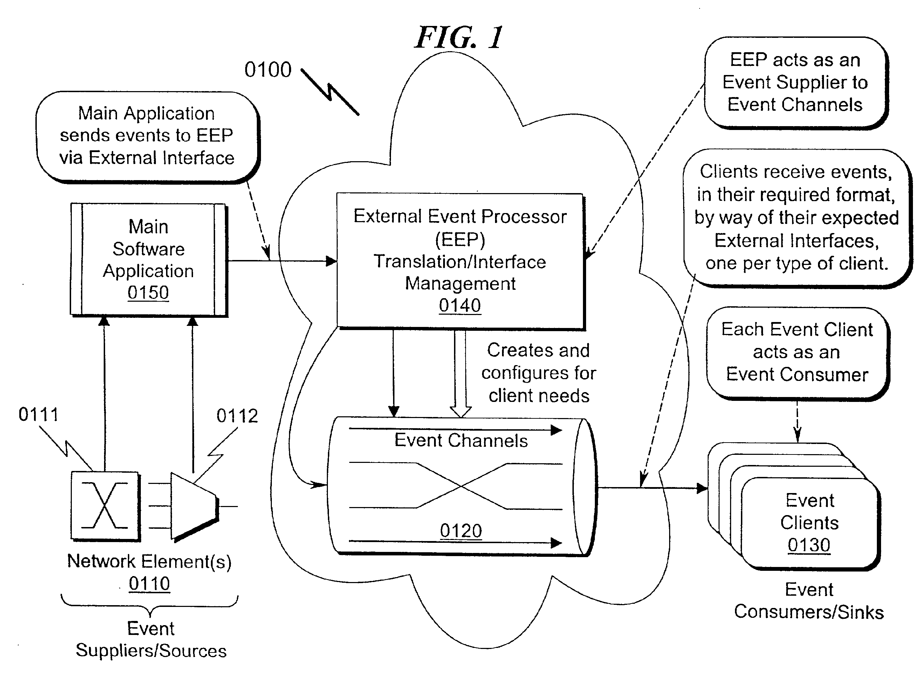

As illustrated in FIG. 1 (**0100**), the present invention may have application in situations where there are one or more event suppliers/sources (**0110**) that communicate via event channels (**0120**) to target event consumers/sinks (**0130**). Many distributed software solutions exchange large amounts of data by way of events. These events must be transported efficiently from initial event suppliers (**0110**) to final event consumers (**0130**). In complicated systems, the transport mechanisms are usually a set of event channels (**0120**). The number and event content of the channels depends upon the application. To complete the event transport architecture (ETA), the initial event suppliers (**0110**) and event consumers (**0130**) must be connected to the event channels (**0120**).

The present invention deals specifically with the translation and interface management aspects of event processing as implemented in an External Event Processor (EEP) (**0140**). This EEP component provides an external interface that may communicate directly with network elements (**0111, 0112**) and/or a main software application (**0150**) to coordinate event communication between event sources (**0110**) and event sinks (**0130**) through one or more event channels (**0120**).

### Exemplary Application (0200)

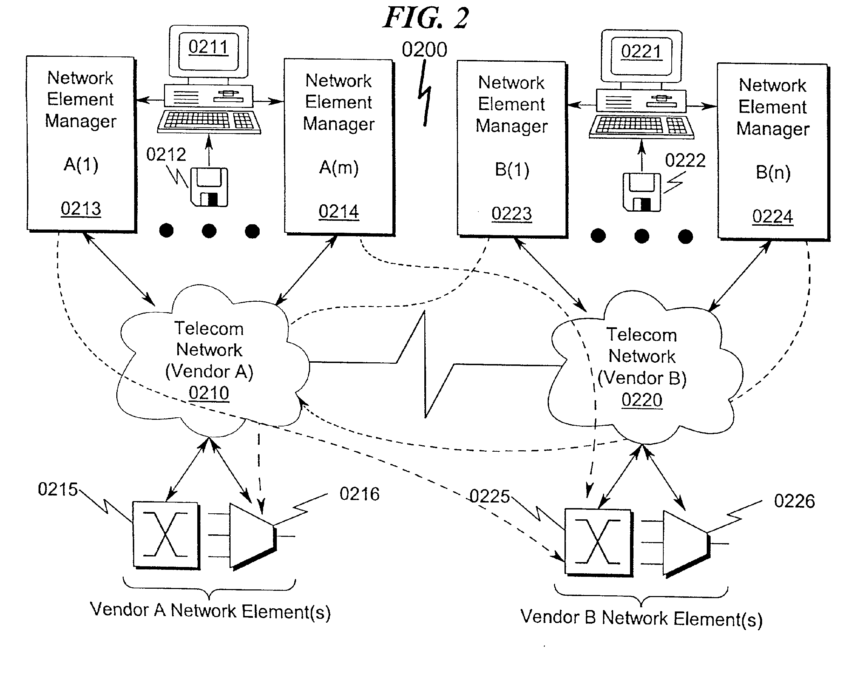

As illustrated in FIG. 2, the present invention may have application (among others) in situations where there are one or more telecommunications networks (**0210, 0220**) that may or may not contain equipment from different vendors. The network equipment elements (NE) used within these networks (**0215, 0216, 0225, 0226**) may take many forms, including but not limited to switch gear, multiplexers, and the like. These network elements (**0215, 0216, 0225, 0226**) are generally under control of one or more computer systems (**0211, 0221**) that are controlled by computer software (**0212, 0222**) that may be stored on a variety of storage media. This computer software generally takes the form of one or more network element managers (**0213, 0214, 0223, 0224**) that control and monitor the network elements (**0215, 0216, 0225, 0226**) that comprise constituent components of the telecommunication networks (**0210, 0220**). In these circumstances, the present invention may deal specifically with implementations of the event transport architecture (ETA) as it relates to the overall control and monitoring of the various network elements (**0215, 0216, 0225, 0226**) within the context of one or more telecommunications networks (**0210, 0220**).

### Background and Description of the Prior Art

### Overview

Network Management software must often meet multiple, and sometimes conflicting, requirements for transporting events from Network Elements to external software components. Different event types and formats, different interfaces for registering for events and controlling their flow, and different Quality of Service (QoS) requirements are all required by different kinds of software components. Each component wishes to receive events about Network Elements, but wants it on their own terms. These requirements may also change during the lifecycle of the Network Management software, requiring new software releases and in the field changes of existing installations of the software.

Servicing these different event transport needs of multiple event consumers is a difficult task. A typical approach is to meet these requirements in a single application component that is also used to manage other essential (but not event related) functions. This "all in one basket" approach results in higher software development costs, higher maintenance costs and reduced flexibility in dealing with changes in requirements. This is because all event transport capabilities are coupled to all other functions, with all capabilities being in one component.

Software development costs are higher because there must be close, continual, and highly integrated development between the event transport function team and other teams. To meet the event transport requirements, software designs usually impact the external interfaces of a component, its persistence mechanisms, its internal configuration, the usage of threads in the component and the selection of implementation technologies. Each of these choices may conflict with other component design decisions that are driven by non-event related functions. In order to reconcile these (possibly conflicting) choices, more work must be done. This results in higher costs. It also results in a high degree of coupling between event transport related design decisions and those of every other function.

Due to the complexity of the initial software design, any changes will result in higher maintenance costs than for a simpler design. Worse, even a minor change in event transport requirement may require rework of other component design choices that are not event related due to the excessive coupling.

Finally, the entire composite component, which has coupled the event transport functions with all others, is very inflexible to change. Assume a new client wishes to receive events, but needs to use a different external interface than other clients. This new requirement may not even be feasible given the original, closely coupled design. If it is, then a new version of the original software component must be made with just this new event transport feature. Then, installed versions of the component must be replaced so that the new feature is available. Usually this requires that the running component be stopped and restarted with the new version. Unfortunately, to change just the event transport feature, all other functions must be stopped as well. In large systems servicing mission-critical business needs, this is highly undesirable.

Fundamentally, the problem is how to best implement within software the necessary event transport features in a way that isolates them from all other network management functions.

### Prior Art Solutions

The best existing prior art solution to this problem is to isolate the event transport software implementation in a separate software package. A software package is a grouping of specific software capabilities in a standalone file or set of files. The software package is accessed by the primary application through an application programming interface (API). By encapsulating the event transport features in a separate software package (or packages), coupling between these functions and others of the main application is reduced.

### Deficiencies in the Prior Art

For prior art solutions, the driving requirements for event transport require key design decisions in the event transport software package that affect the main software application that uses it. The prior art solution requires that both the main software application and the event transport software package be in the same software process. Thus, decisions in the event transport software package that impact this process also impact the main software application. Decisions about persistence storage, threading of control, external interfaces, usage of other third-party products, usage of other libraries or software packages, would affect the single software process as a whole. Many of these decisions for the event transport software package have to be integrated with those of the main software application or the single software process will not function properly.

Furthermore, if new requirements in event transport changed the software package, then these design decisions all have to be revised. Once the new design is completed, a new version of the main software application must be created. Then this new version must be deployed to replace existing, installed applications. This approach does not remove the problem of having to stop and subsequently restart the main application.

Some software packaging technologies are sophisticated enough where the software packages can be deployed independently from the application that uses them. However, this independent deployment can only be used if the software package is weakly coupled to the primary software application. This is rarely the case for software providing event transport features for the coupling reasons outlined above.

### Objectives of the Invention

Accordingly, the objectives of the present invention are (among others) to circumvent the deficiencies in the prior art and affect the following objectives:
(1) To reduce software maintenance overhead associated with Event Processing Systems.
(2) To reduce the coupling between event transport and the main software application.
(3) To permit updates of the event transport mechanism without requiring software system restarts and/or application system interruptions.
(4) To reduce deployment complexity in large, complex, and/or mission-critical system applications.
(5) To separate event processing functionality into a separate software component that encapsulates a logically cohesive set of necessary event transport functionality.
(6) To encapsulate all policies regarding events in a single software component. Subsequent changes to these policies will only affect this single component.
(7) To permit event related functionality to be developed and tested independently of other framework components. This feature enables parallel development of the Generic Element Management (GEM) Framework and subsequent testing.
(8) To permit new event related interfaces to be added without changing other GEM components.

While these objectives should not be understood to limit the teachings of the present invention, in general these objectives are achieved in part or in whole by the disclosed invention that is discussed in the following sections. One skilled in the art will no doubt be able to select aspects of the present invention as disclosed to affect any combination of the objectives described above.

### Brief Summary of the Invention

### Overview

The present invention is contrasted with the prior art in that rather than encapsulate the event transport features into a separate software package, the event transport implementation is placed in a separate software process. This breaks the implementation design coupling between the event transport features and those in the main software application. By having a separate process, any design decisions associated with event transport will not impact the main software process; it will only affect that of the event transport component. The new component thus encapsulates all implementation design decisions associated with event transport.

An external interface to this new component is provided so that the main software application can send the basic event from Network Elements. The new component is responsible for translating the received events into the desired formats and types required by client event consumers. The new component provides the required external interfaces for clients to register for receiving events.

By placing all the event transport features into a separate component running in its own software process, all direct coupling is removed. Implementation of the separate component can proceed completely independently from that of the main application. All problems associated with the direct coupling generated by existing prior art solutions are avoided.

### Exemplary Advantages

The present invention avoids the problems of the existing prior art solutions and their related costs. The quantifiable costs are a function of the specific event transport requirements. In some cases, where the requirements are minimal, these costs will be very small and the present invention is not cost efficient. With requirements for multiple kinds of event consumers with different interfaces and substantially different interface requirements, the present invention will be very cost effective.

Furthermore, as a separate software process, the present invention can be updated in the field without impacting the other Network Management functions. In practice, the present invention can be stopped and restarted in its new form with either little or no loss of event transport to event consumers.

The only drawback of the present invention is that it requires the development and deployment of a separate software component. The deployment costs of the new software component are roughly comparable to developing a separate software package, which constitutes the existing prior art solution to the event transport problem addressed. However, the deployment costs of this solution are higher as a separate software component. The software component must be managed and controlled in its runtime environment as any other software application. However, these costs are merely incremental, as these capabilities must also be provided for the main application.

### Brief Description of the Drawings

For a fuller understanding of the advantages provided by the invention, reference should be made to the following detailed description together with the accompanying drawings wherein:
FIG. 1 illustrates a generalized system overview of the present invention;
FIG. 2 illustrates an exemplary architectural overview of how the present invention interfaces into an integrated multi-vendor network management system incorporating computer monitoring, configuration, and the like via software control;
FIG. 3 illustrates a generalized system application utilizing the present invention;
FIG. 4 illustrates the internal functional architecture of a preferred embodiment of the present invention and illustrates how the exemplary application connects instances of event dispatchers, event translators and event listeners to transport received events to clients and in the proper format;
FIG. 5 illustrates an exemplary diagram of the primary publicly visible classes in the application package;
FIG. 6 illustrates an exemplary diagram of the primary publicly visible classes in the dispatch module;
FIG. 7 illustrates an exemplary diagram of the primary publicly visible classes in the ECOM Client module;
FIG. 8 illustrates an exemplary diagram of the primary publicly visible classes in the GEM Client module;
FIG. 9 illustrates an exemplary diagram of the primary publicly visible classes in the translate module;
FIG. 10 illustrates an exemplary diagram of the primary publicly visible classes in the transport module;
FIG. 11 illustrates an overview of the functional behavior of the exemplary application;
FIG. 12 illustrates how the exemplary application reads its configuration and initializes its internal capabilities;
FIG. 13 illustrates how the exemplary application initializes its internal event translation capability and connects it to the internal event transport mechanisms;
FIG. 14 illustrates how the exemplary application initializes the internal event transport structures;
FIG. 15 illustrates how the exemplary application handles client registration to receive events;
FIG. 16 illustrates how the exemplary application receives events, processes them, and sends them to registered clients.

### Description of the Presently Preferred Exemplary Embodiments

While this invention is susceptible of embodiment in many different forms, there is shown in the drawings and will herein be described in detailed preferred embodiment of the invention with the understanding that the present disclosure is to be considered as an exemplification of the principles of the invention and is not intended to limit the broad aspect of the invention to the embodiment illustrated.

The numerous innovative teachings of the present application will be described with particular reference to the presently preferred embodiment, wherein these innovative teachings are advantageously applied to the particular problems of a DISTRIBUTED EXTERNAL EVENT PROCESSOR SYSTEM AND METHOD. However, it should be understood that this embodiment is only one example of the many advantageous uses of the innovative teachings herein. In general, statements made in the specification of the present application do not necessarily limit any of the various claimed inventions. Moreover, some statements may apply to some inventive features but not to others.

### Definitions

Throughout the discussion in this document the following definitions will be utilized:

### System Blocks / Procedural Steps Not Limitive

The present invention may be aptly described in terms of exemplary system block diagrams and procedural flowcharts. While these items are sufficient to instruct one of ordinary skill in the art the teachings of the present invention, they should not be strictly construed as limiting the scope of the present invention. One skilled in the art will be aware that system block diagrams may be combined and rearranged with no loss of generality, and procedural steps may be added or subtracted, and rearranged in order to achieve the same effect with no loss of teaching generality. Thus, it should be understood that the present invention as depicted in the attached exemplary system block diagrams and procedural flowcharts is for teaching purposes only and may be reworked by one skilled in the art depending on the intended target application.

### Personal Computer Not Limitive

Throughout the discussion herein there will be examples provided that utilize personal computer (PC) technologies to illustrate the teachings of the present invention. The term 'personal computer' should be given a broad meaning in this regard, as in general any computing device may be utilized to implement the teachings of the present invention, and the scope of the invention is not limited just to personal computer applications.

### Internet/Intranet Not Limitive

Throughout the discussion herein the terms Internet and Intranet will be used generally to denote any network communication system or environment. Generally the term Intranet will denote communications that are local to a given system or user, and Internet will describe communications in a more distant local. One skilled in the art will recognize that these terms are arbitrary within the contexts of modern communication networks and in no way limitive of the scope of the present invention.

The present invention specifically anticipates that in some implementations the GUI development framework (and/or its runtime component) will communicate with the data used to drive the GUI over the Internet. Thus, the application driving the user interface may reside on one computer system and the data used for presentation and control may be contained somewhere else on another computer system and be accessed via any number of networking protocols.

### Application Programming Interface (API) Not Limitive

While the present invention may be in part implemented using standard Application Programming Interfaces (APIs) such as Software Development Kits (SDKs) and the like, there is no requirement that the present invention be implemented using these tools. Note also that the framework of the present invention may be incorporated into standard toolkits and the like which may or may not be integrated into an API framework for use in standard software development frameworks.

### Operating System Not Limitive

Additionally, while the present invention may be implemented to advantage using a variety of Microsoft® operating systems (including a variety of Windows™ variants), nothing should be construed to limit the scope of the invention to these particular software components. In particular, the system and method as taught herein may be widely implemented in a variety of systems, some of which may incorporate a graphical user interface. Some examples of these include HP-UX™, LINUX™, SOLARIS, and UNIX™ (and its variants), among others.

### Data Structures Not Limitive

The present invention may be embodied in a variety of data structures in some preferred embodiments. However, the form of such data structures as described herein is only exemplary. One skilled in the art would quickly realize that a wide variety of other data structures could be used equivalently in this application. Therefore, no data structure contained herein should be interpreted as limiting the scope of the present invention.

### Communication Media Not Limitive

The present invention may be embodied to affect transport of event channel information over a variety of communication media. However, the signal format used to transmit such transmissions as described herein is only exemplary. One skilled in the art would quickly realize that a wide variety of other communication media could be used equivalently in this application. Therefore, no communication media contained herein should be interpreted as limiting the scope of the present invention.

### CORBA Not Limitive

The present invention may be implemented using the CORBA object oriented framework in some preferred embodiments. However, the form of implementation described herein is only exemplary. One skilled in the art would quickly realize that a wide variety of other distributed object oriented frameworks could be used equivalently in this application. Therefore, no framework contained herein should be interpreted as limiting the scope of the present invention.

A detailed technical description of the Naming Service used within the context of the various exemplary embodiments of the present invention can be obtained by referring to the CORBA Standard Services documentation ("The Common Object Request Broker: Architecture and Specification" at ftp://ftp.omg.org/pub/docs/formal/98-12-01.pdf).

A detailed technical description of the Notification Service used within the context of the various exemplary embodiments of the present invention can be obtained by referring to the 1998 Object Management Group (OMG) Notification Service, Joint Revised Submission, November 1998, OMG TC Document telecom/98-11-01, BEA Systems et. al. (ftp://ftp.omg.org/pub/docs/formal/).

### Application Overview

### Relationships to Invention Overview

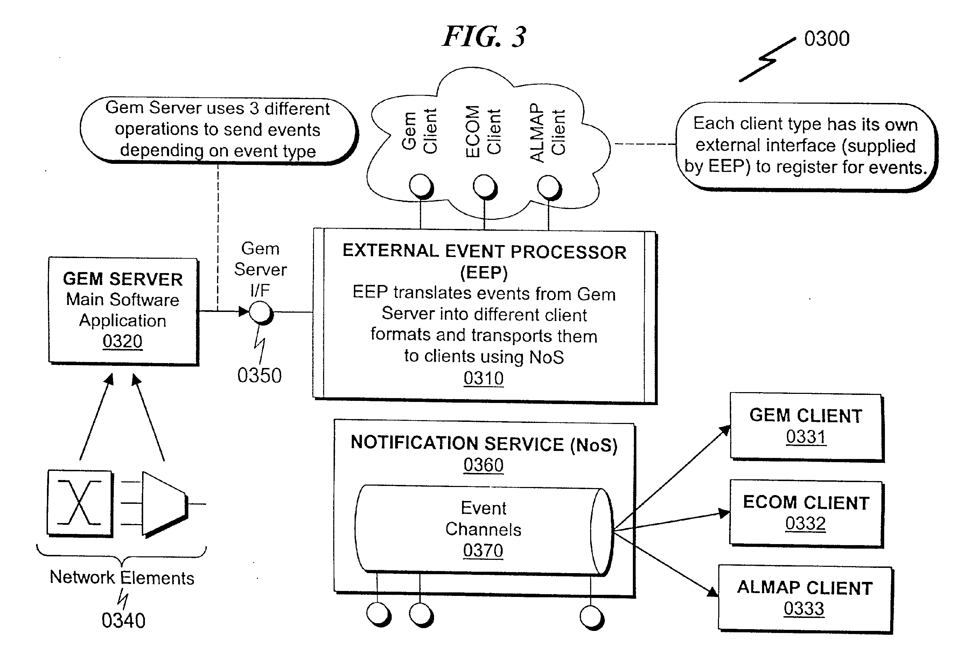

In the following discussion about the exemplary application, the specific components are related to the invention context in FIG. 1. In the exemplary application, the GEM Server is the Main Software Application (**0150**). It receives events from Network Elements (**0111**, **0112**). It sends these events to the exemplary application of EEP (**0140**). The EEP then uses Event Channels (0120) to send the received events, re-formatted for specific clients, to the ultimate Event Consumer Clients (**0130**). In the case of the exemplary application, there are three event client types, GEM Client, ECOM Client and ALMAP Client. There is usually more than one instance of each client type connected to EEP. FIG. 3 provides an overview of the exemplary application, with its specific details, in a form similar to that of FIG. 1.

### Separate Application

The present invention as embodied in an External Event Processor (EEP) is generally implemented as a separate, stand-alone application. This application is usually run on the same delivery platform used by the GEM and event client consumers. The exemplary EEP application uses CORBA interfaces to provide access to its services. The EEP is started and stopped whenever its associated GEM Server is started or stopped.

### Necessary Event Interfaces

The EEP has public interfaces for a variety of event consumer clients: GEM clients, ECOM clients and ALMAP clients. Each event consumer client type uses the EEP to register for receiving events from the GEM server. The received events are in the format that the specific client expects. The GEM Server sends events to the EEP for processing and dispatching to the registered clients.

### Operational Behavior

At run-time, the EEP receives events from the GEM Server. These events have a structure that supports the GEM Server requirements. When the events result from activity on a physical Network Element (NE), the events will contain data specific to the originating NE. Upon receipt of the event, EEP dispatches the event in the existing GEM format to registered GEM clients.

In addition to the above, the EEP translates and reformats the event into ECOM specified event structures. In the case of the exemplary application, the translation is necessary to convert from NE-specific data to ECOM generic data. The EEP then dispatches the newly translated and formatted event to registered ECOM clients. It does this in accordance with any filters and quality of service parameters established by the ECOM clients during registration.

Finally, the EEP may translate and filter received events for transport to registered ALMAP clients.

### Architectural Overview (0300)

FIG. 3 (**0300**) illustrates the architecture for the External Event Processor (EEP). Other external applications, not part of this exemplary application, are shown with rectangles. They include the GEM Server (**0320**); three specific event client types: GEM Client (**0331**), ECOM Client (**0332**) and ALMAP Client (**0333**); and a Notification Service (**0360**) that provides the Event Channel instances used by EEP to transport events.

The event clients, and the GEM Server, access the EEP functionality using different external interfaces as shown in FIG. 3 (**0300**). There is one external interface for each type of client and one for the GEM Server itself. Each of these interfaces is specific to each external application. EEP encapsulates the details of how these external interfaces are implemented. For information, the external interfaces used for each Event Channel are also shown in the Notification Service (**0360**).

The existence of the EEP (**0310**) is transparent to all event clients. The clients are only aware of the client specific public interfaces. Only the GEM Server itself (**0320**) is specifically aware of the EEP in this exemplary embodiment.

FIG. 3 (**0300**) also illustrates the flow of events in the exemplary application. The Network Elements (**0340**) generate events and send these to the GEM Server (**0320**). Using the GEM Server external interface (**0350**), these events are sent to the EEP (**0310**). The EEP processes these events by filtering, translating and dispatching them as needed. Ultimately, the EEP sends these events to the required Event Channels (**0370**) for delivery to event clients.

### Detailed Architecture (0410)

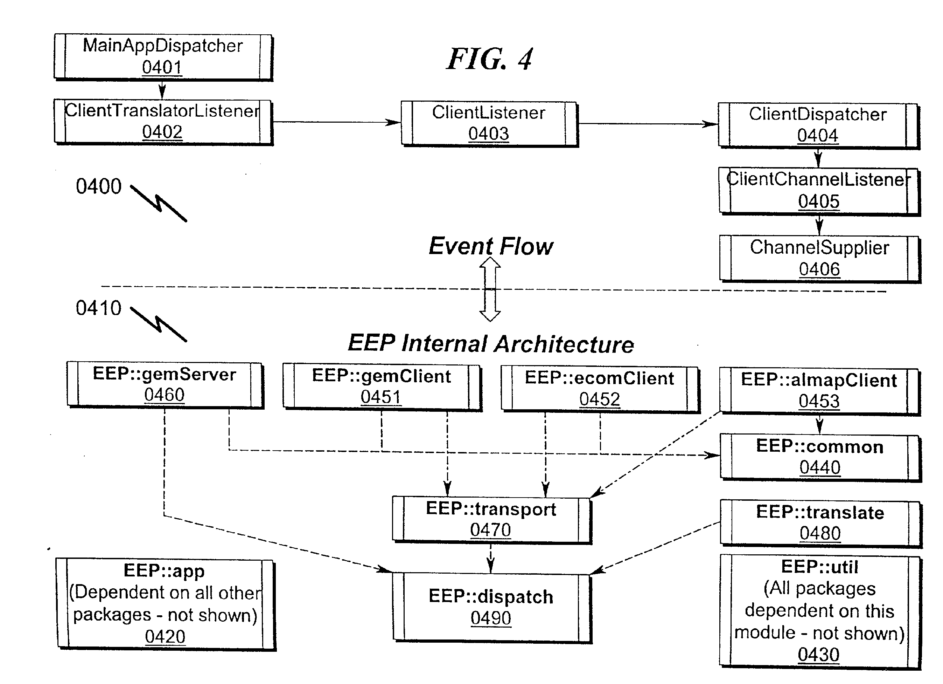

FIG. 4 (**0410**) illustrates an exemplary internal architecture of the EEP process itself. In this exemplary embodiment, the EEP is shown as a set of software packages along with the dependencies between the packages. Each package represents a software module within the EEP, and each module contains specific classes designed to provide the necessary features for the module.

High-level descriptions of each module are provided below.

### Application Module (EEP::app) (0420)

This module represents the application as a whole. It contains classes necessary to start, stop, and control the overall sequence of the application.

### Primary Responsibilities

a. Contains the main routine, which processes configuration parameters (configuration files and command line arguments); initialize other modules; and enters the main processing loop.
b. Shuts down the application upon request.
c. Provides the implementation (***EventProcessorImpl***) of the EEP external CORBA interface, EventProcessor, for the GEM Server.
d. Constructs the set of internal ***IEventDispatchers*** used by the EEP to move received GEM Server events to event client Event Channels.

### Collaborators

1. All other modules, which are initialized by this one.
e. **dispatch** (**0490**) for making instances of ***IEventDispatcher*** for routing events as needed.

### Utility Module (EEP::util) (0430)

This module contains all the generic utility functions used by the other packages. Further details about this module are not necessary to understand this exemplary application. One skilled in the art will recognize that such utility functions are dependent upon the actual implementation technologies used to build the exemplary application.

### Common Module (EEP::common) (0440)

This module (**0440**) contains classes that are used in common by all the other modules. Further details about this module are not necessary to understand this exemplary application. One skilled in the art will understand when common classes are required and enclose them in a module such as this one.

The Common Module (**0440**) contains implementation specific classes that are used by all other internals in the EEP. The contents of this module vary depending upon the implementation technologies used to construct the EEP. One skilled in the art will no doubt recognize that the specific classes to be used are a function of the specific implementation approach taken.

### GEM Client Module (EEP::gemClient) (0451)

This module (**0451**) contains all the classes necessary to provide the public external interfaces for GEM clients.

### Primary Responsibilities

1. Provide implementation of GEM Client external interfaces to include thread policies. Publish necessary interfaces for access by GEM clients.
2. Call the transport module to provide for registration, disconnect, and Filter functionality.

### Collaborators

1. Dependent upon app module (**0420**) for initialization and **common** module (**0440**) for access to common resources.
2. Dependent upon **transport** module (**0470**) for actual implementation of transporting events to actual Gem Clients.
3. Dependent **upon** the translate module (**0470**) to convert Gem Server events into Gem Client formatted alarm events.

### ECOM Client Module (EEP::ecomClient) (0452)

This module (**0452**) provides the same functionality as for ECOM clients as the GEM Client Module (**0451**) provides for GEM clients. It has the same primary responsibilities and collaborators as the GEM client module (**0451**) but does it for ECOM clients instead of GEM Clients.

### ALMAP Client Module (EEP::almapClient) (0453)

This module (**0453**) provides the same functionality for ALMAP clients as the GEM Client Module (**0451**) provides for GEM clients. It has the same primary responsibilities and collaborators as the GEM client module (**0451**) but does it for ALMAP clients instead of GEM Clients.

### GEM Server Module (EEP::gemserver) (0460)

This module provides the implementation of the external interfaces for the GEM Server (**0320**).

### Primary Responsibilities

1. Create the implementation of the GEM Server external interface and publish it as required by the GEM Server.
2. Provide features for registering the GEM server.
3. Provide features for receiving events from the GEM Server and dispatching them into the rest of the EEP.

### Collaborators

1. Uses the **util** (**0430**) and **common** (**0440**) modules for access to application resources.
2. Uses the **dispatch** module (**0490**) to dispatch received events.

### Transport Module (EEP::transport) (0470)

This module (**0470**) provides the means to transport events from the EEP to event clients. It accesses the external Notification Service (**0360**) for Event Channels. It configures these Event Channels and connects them to the internal EEP event dispatching mechanisms. It creates a specific event transport configuration (Event Channel, its configuration and connection within EEP) for each event client type. The configuration is created as clients register for events.

### Collaborators

1. Uses **dispatch** module (**0490**) to connect Event Channels for event clients.
2. Uses **util** (**0430**) and **common** (**0440**) modules for access to application resources.
3. Uses Notification Service (**0360**) to arrange for actual transport of events.
4. Used by event client modules, **gemClient** (**0451**), **ecomClient** (**0452**), and **almapClient** (**0453**) to indicate which clients want which events, Filtering and QoS setup and control of event flow.

### Translate Module (EEP::translate) (0480)

This module (**0480**) contains the classes that can translate, or convert, events from the GEM server (**0360**) into specifically formatted events for various event clients. Instances of these classes are created by the **app** module (**0420**) at runtime, wrapped in event listeners and registered to listen for events from the GEM Server. Upon receipt of the events, the translators convert the received event into the appropriate format for the specific event client and re-dispatch it.

### Dispatch Module (EEP::dispatch) (0490)

This module (**0490**) provides the means to internally dispatch received events from the GEM Server (**0460**) to different client translators, then to different client dispatchers and, finally, to the Event Channels for each client. In this fashion, received events are translated for each client and transported as necessary.

### Primary Responsibilities

1. Receive events sent to it and dispatch the event, by event type, to registered listeners.
2. Registers/unregister listeners for events by event types.
3. Provide thread policy for event dispatching.

### Collaborators

1. Used by **gemServer** (**0460**) to dispatch events received from the GEM Server.
2. Used by **transport** module (**0470**) to register listeners for client-formatted events. These listeners are connected to the client specific Event Channels.
3. Used by **translate** module (**0480**) to register listeners for events that will be translated.
4. Used by **translate** module (**0480**) to dispatch translated events to the client specific dispatchers.

### Detailed Class Descriptions

To implement each module in the exemplary application, a number of logical classes are required. This section describes the primary classes for each module in more detail. This information can be used by one skilled in the art to understand how the EEP internally performs its functions.

### Application Module (0500)

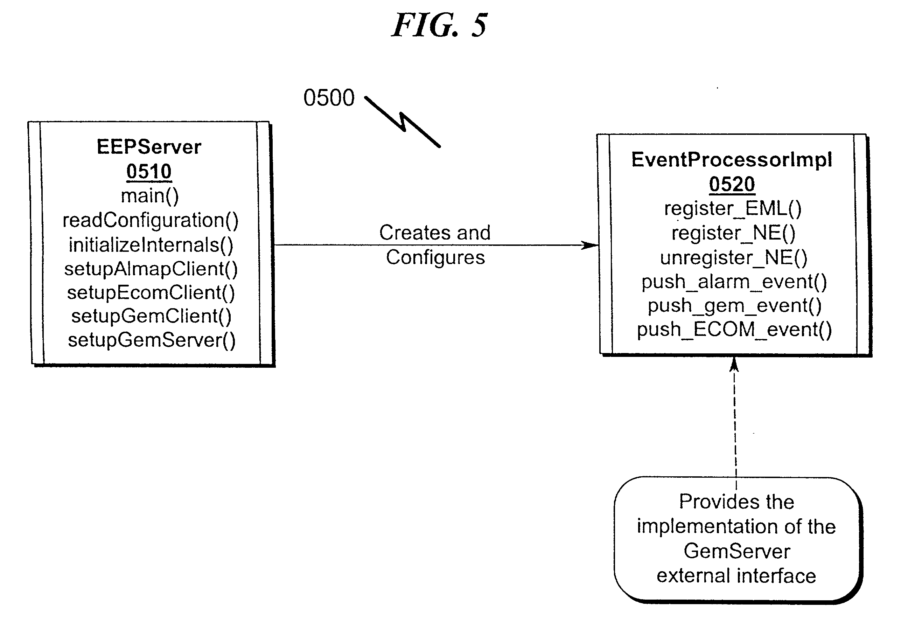

FIG. 5 (**0500**) illustrates an exemplary class diagram of the primary, publicly visible classes in the application module.

### EEPServer (0510)

This static class represents the EEP application itself. It has the implementation of the main method. The main method calls other static methods that initialize the other packages in an order that is application specific. Its methods include:
- ***main -*** static function that runs the application. Calls other static functions and then runs the ORB (via a call to **ORB_Manager::runORB()).**
- ***readConfiguration -*** static function that reads the configuration data and sets up internal data structures containing the configuration data.
- ***initializelnternals -*** static function that initializes the other packages in the application in a logical order. Due to dependencies, the logical order is: **util, common, dispatch, translate, transport, client modules** and gemServer module.
- ***setup -*** private static functions that setup the application to support the GEM Server and all the EEP event clients (ALMAP, ECOM, Gem).

### EventProcessorImpl (0520)

- This class is a singleton that implements the **EventProcessor** interface for the EEP. Only the GEM Server calls this interface. Its methods include:

- ***register_EML*/*NE -*** registers a new EML application, or Network Element, with the EEP. This allows the Gem Server to notify the EEP that it is ready for operations at the EML/NE level. In addition, if the Gem Server needs any data from the EEP, this operation can return this data.
- ***unregister_NE -*** the inverse of the ***register_NE*** operation. Called when the GEM Server is no longer managing a specific NE.
- ***push_alarm_event, push_gem_event, push_ECOM_event -*** these operations allow the GEM Server to forward events received by the NEs to the EEP for subsequent processing. There are multiple operations to deal with the different kinds of events.

### Dispatch (0600)

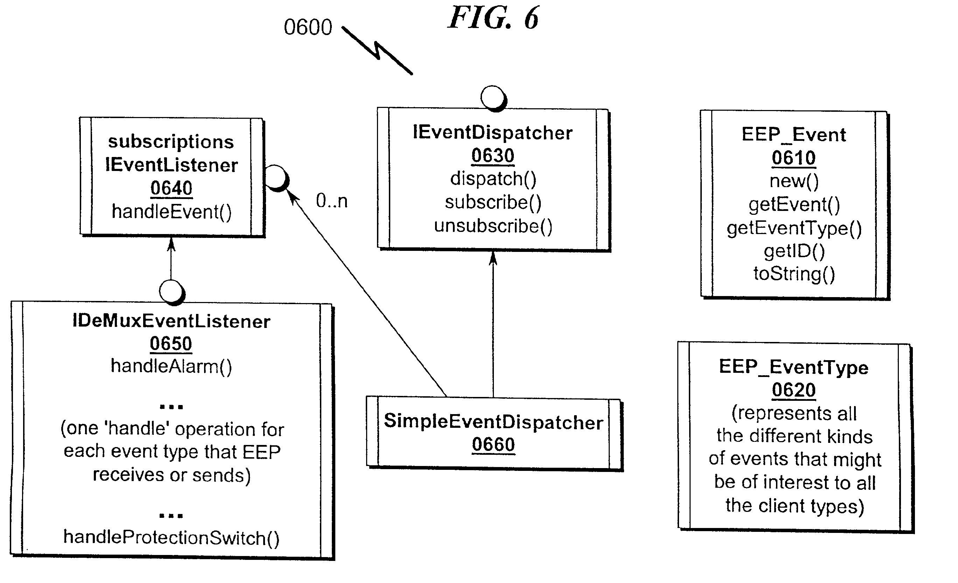

FIG. 6 (**0600**) illustrates an exemplary class diagram of the primary, publicly visible classes in the dispatch module. These classes define the different event types, means to dispatch the events within the EEP application and classes to handle the events once dispatched. These classes are primarily used by the transport module to get events to the internal event transport architecture that is constructed to deliver the events to EEP clients.

### EEP_Event (0610)

This class (**0610**) encapsulates the different forms of events for this application. A single instance gets created with each instance of an event. It knows the event type and provides operations to access the event and details about it. Its methods are:
- ***new-*** Create an instance wrapping the supplied ***event.***
- ***getEventType() -*** Returns the **EEP_EventType** instance that represents its ***event.***
- ***getEvent() -*** Returns the ***event.***
- ***getlD() -*** Returns the identity value of the ***event.***
- ***toString() -*** Returns a String that describes its ***event*** *and* its event type.

### EEP_EventType (0620)

This class represents the different known event types for EEP. An instance of this class exists for each unique kind of event type that gets sent to the EEP from the GEM Server and for each unique kind of event type sent to EEP clients. These instances are accessible by public, static methods on this class. Other methods are provided for internal access to the event data.

### IEventDispatcher (0630)

This interface is for dispatching (arranging the order, timing and destination) of events within the EEP. Implementations of this interface are used in the EEP to 'direct traffic', routing events received from the GEM Server to different destinations as required. This interface represents the destination of events by way of event listeners. Listeners register on an ***IEventDispatcher*** in order to receive events. The number of ***IEventDispatchers,*** what events are sent to them and what event listeners are registered determine the transport path of any event.

This interface defines methods for subscribing and unsubscribing event listeners. A method for suppliers to dispatch an event to the listeners is also provided. The basic methods are:
- ***dispatch () -*** Dispatch the event to all registered event listeners (subscribers) as appropriate.
- ***subscribe () -*** Subscribe the listener to events that this ***IEventDispatcher*** gets asked to dispatch. The listener can supply a list of event types that it is interested in receiving.
- ***unsubscribe ()*** - Remove the listener from the list of subscribers for all event types.

A specific implementation of the ***IEventDispatcher*** is shown in FIG. 6 (**0600**) as the ***SimpleEventDispatcher*** (**0660**).

### IEventListener (0640)

This is an interface that defines methods for handling an event. An ***IEventDispatcher*** calls this method whenever it receives an event and the type of the event matches that requested by the listener. The basic method is:
- **handleEvent () -** handle the event whose type matches what the listener subscribed for.

### IDeMuxEventListener (0650)

This is a more sophisticated listener that extends ***IEventListener.*** A handle method is provided for each specific event type. More sophisticated internal event transport schemes can be employed with this kind of listener. The exemplary application uses this kind of listener to deliver specific event types to specific types of clients.

### ECOM Client (0700)

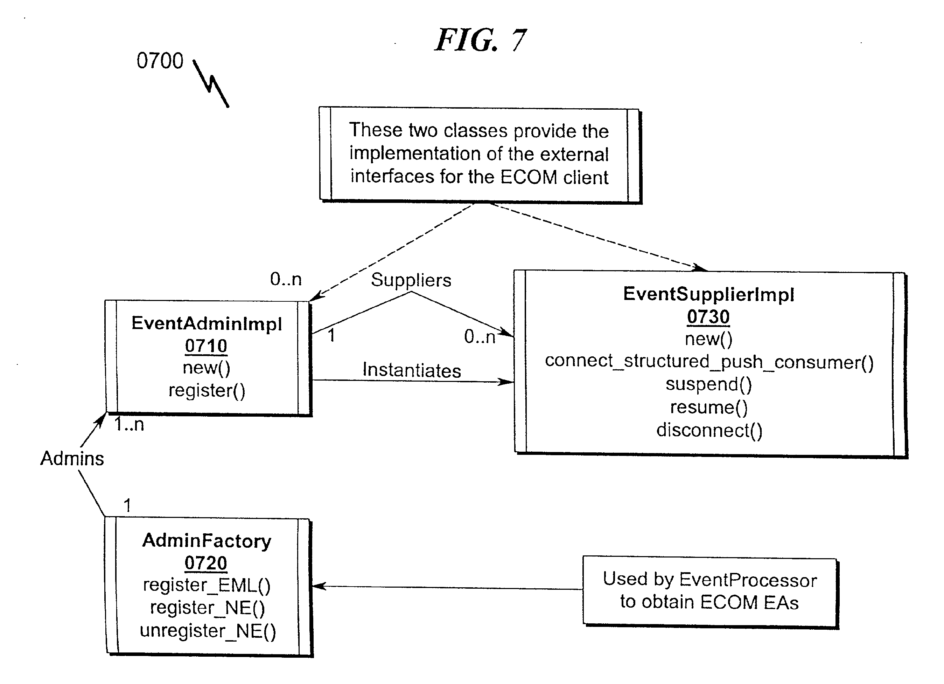

FIG. 7 (**0700**) illustrates an exemplary class diagram of the primary publicly visible classes in the ECOM client module. This is one of several client packages in the exemplary application. The application provides a client specific module for each client that may receive events from the EEP. Each client module encapsulates the details of how the client registers to receive events. Client specific interfaces are provided for this purpose and managed by an internal class.

### EventAdminImpl (0710)

This class (**0710**) provides an implementation of the specific ECOM client interface for obtaining EventSupplier instances, which is how ECOM clients register to receive events. The ***new*** operation is used to create instances of this class, under the control of the ***AdminFactory*.** The ***register*** operation is used by ECOM clients to register for events.

### AdminFactory (0720)

**The *AdminFactory*** class (**0720**) is the internal class used to manage the ECOM client specific classes. The exemplary application uses this class to setup and configure the client specific interface. In the case of the ECOM client, this class provides operations, called by EEP internal procedures, to cause ECOM interfaces to be created and destroyed. The listed operations correspond to those described for the ***EventProcessorImpl*** (**0520**). The register_EML/NE operations result in the creation of instances of ***EventAdminImpl*** and ***unregister_NE*** results in destruction of ***EventAdminImpl*** instances.

Not shown is an ***init*** operation that is called by the **app** module to initialize this specific event client module. For the ECOM client, the ***init*** behavior is to create internal support objects, which are not shown.

For each created ECOM specific interface, the ***AdminFactory*** also interacts with the transport module. This interaction results in the creation of the client specific event transport structures required for this client.

### EventSupplierImpl (0730)

This class (**0730**) is used to implement the ECOM Client specific interface used to control the flow of events. Instances of this class are created each time an ECOM client calls the register operation on the ***EventAdminImpl*** class. This interface provides operations for a client to connect an event consumer to the supplier and control the flow of events to it. The key methods are:
- ***connect_structured_push_consumer() -*** Connect the client supplied event consumer to the event flow for this client. This step completes the pathway of event flow from the GEM Server, through the EEP to the ultimate client event consumer.
- ***suspend*/*resume () -*** These operations allow the client event consumer to stop and start the flow of events from the EEP.
- ***disconnect () -*** This operation allows the client event consumer to tell the EEP that it is no longer interested in events. The EEP releases any internal resources for this specific client event consumer and no longer sends events to it.

### GEM Client (0800)

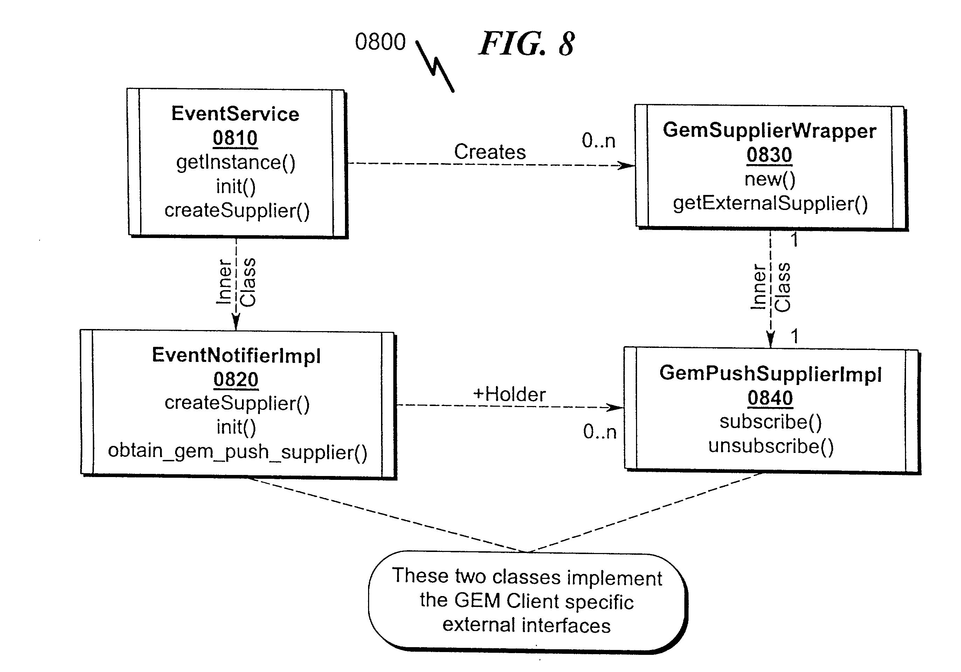

FIG. 8 (**0800**) illustrates an exemplary class diagram of the primary publicly visible classes in the GEM client module. This class has implementation classes for the GEM specific client interfaces. There are managing classes that connect these implementations to the event transport structures in the transport module.

### EventService (0810)

This class (**0810**) is an internal management class for the instance of ***EventNotifierImpl.*** This class is used by the exemplary application to initialize the GEM client specific module, create and publish an instance of the ***EventNotifierImpl*** and hold the list of event suppliers created for each GEM client. In addition, it contacts the transport module to trigger the creation of the internal event transport structures for this client. Its primary operations are:
- ***getInstance() -*** Return the sole instance of this class.
- ***init()*** - initialize the gemClient module with the application configuration information. This operation creates an instance of ***EventNotifierImpl,*** activates it, and publishes the interface in the specific location expected by GEM clients. This has the side effect of initializing the event transport structures in the transport module for the specific GEM event client type.
- ***createSupplier() -*** This is an internal operation that is called every time the ***EventNotifierImpl*** triggers its own ***createSupplier*** operation. An instance of a ***GemSupplierWrapper*** is created and initialized. This results in an instance of ***GemPushSupplierImpl*** being created and, ultimately, returned back to the calling GEM client.

### EventNotifierImpl (0820)

This class (**0820**) provides the implementation of the GEM client specific interface used to register for events. The GEM client calls the ***obtain_gem_push_supplier*** operation to create an instance of ***GemPushSupplierImpl.*** This latter instance is used by the GEM Client to start and stop the flow of events. The other operations listed in the figure are for internal purposes of the exemplary application.

### GemSupplierWrapper (0830)

This class (**0830**) manages each instance of ***GemPushSupplierImpl.*** Instances of this class are created by the ***EventService*** each time a GEM client wishes to register for events. Each instance of this class creates an instance of ***GemPushSupplierImpl*** and connects it to the internal event transport structures provided by the transport module. The operations listed in the diagram are for internal purposes of the exemplary application.

### GemPushSupplierImpl (0840)

This class (**0840**) is used to implement the GEM client specific interface used to control the flow of events. This client specific interface provides a ***subscribe*** operation for a client to connect an event consumer to the supplier. By doing this, the client completes the pathway of event flow from the GEM Server, through the EEP to the client's event consumer. An ***unsubscribe*** operation is provided to tear down this pathway and to stop the flow of events to the client's event consumer.

### Translate (0900)

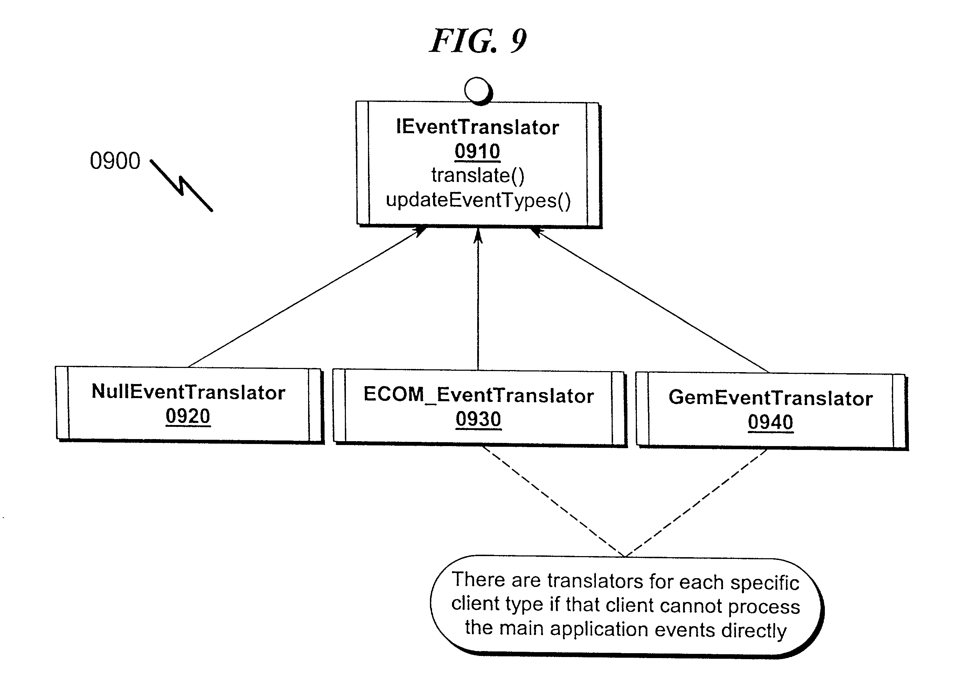

FIG. 9 (**0900**) illustrates an exemplary class diagram of the primary publicly visible classes in the translate module. The ***IEventTranslator*** (**0910**) is an interface with two methods. The first, ***translate***() copies the parameter ***EEP_Event,*** translates it to the appropriate format and returns an ***EEP_Event.*** Other work, such as dispatching the translated event, may be done. The ***updateEventTypes***() is a method intended for future functionality.

Concrete classes that implement the ***IEventTranslator*** include:
- ***NullEventTranslator*** (**0920**) - this class does nothing with the event. It is useful for testing purposes.
- ***ECOM_EventTranslator*** (**0930**) - this class translate the received event to an ECOM format and dispatches the event.
- ***GemEventTranslator*** (**0940**) - this class does the same as ***ECOM_EventTranslator,*** but translates the received event to a GEM format.

### Transport (1000)

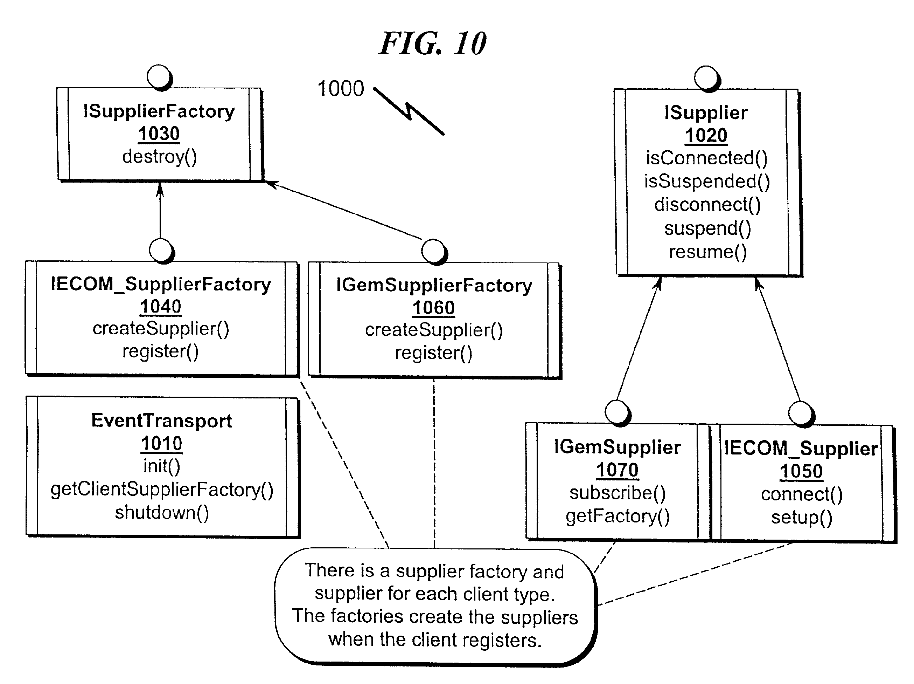

FIG. 10 (**1000**) illustrates an exemplary class diagram of the primary publicly visible classes in the transport module.

### EventTransport (1010)

This is a Singleton class (**1010**) that is the primary entry point for this module. It is initialized by the **app** module. Once initialized, it instantiates the appropriate concrete classes for event transport based upon the transport strategy (see below). The strategy is set by configuration parameters. Other classes are obtained by methods on the ***EventTransport*** class.
- ***init()*** - Called by the **app** module with the application properties. The ***EventTransport*** will use the application properties to determine which concrete subclasses of ***ISupplierFactory*** it will offer to clients. It will contact the Notification Service (**0360**) to get the interface for creating Event Channels.
- ***getClientSupplierFactory() -*** Return the single instance of the concrete class that implements ***ISupplierFactory*** appropriate for the specific client. For each client type, there is a concrete implementation of ***ISupplierFactory.*** The appropriate client modules use the factory to create suppliers that are connected to the client specific internal event transport architecture.
- ***shutdown() -*** Called by the **app** module when application is told to shutdown. This allows the transport module to carry out cleanup and persistence operations.

### ISupplier (1020)

This interface (**1020**) represents a typical supplier of events. Operations for suspend, resume and disconnecting the supplier are provided. Query operations to determine whether the supplier is connected or suspended are also provided.

### ISupplierFactory (1030)

This interface (**1030**) represents a factory of ***ISuppliers.*** An operation to allow destruction of an ***ISupplier*** is provided. No operations for creating ***ISuppliers*** exists as these are expected to be client type specific and are provided by concrete classes that implement this interface, see ***IGemSupplierFactory*** for an example.

### IECOM_SupplierFactory (1040)

This interface (**1040**) extends ***ISupplierFactory*** and is used for the specific ECOM event client. This interface is used by ecomClient module to create instances of ***IECOM_Suppliers*.** A concrete class that implements this interface has behavior to use the ECOM client specific event transport architecture.
- ***createSupplier() -*** An ***IECOM_Supplier*** is created without any setup and then returned. This operation is called by the ecomClient module when ECOM clients register for events (see below). This operation has the side effect of creating a Supplier proxy on the Event Channel for the specific ECOM Client.
- ***register() -*** Create an ***IECOM_Supplier*** and set it up such that it will only transport events of the desired event types and which pass the provided filters. Return the new supplier. This is also used by the ecomClient module and has the same side effect described above.

### IECOM_Supplier (1050)

This interface (**1050**) extends ***ISupplier*** and is used for the specific ECOM event client. This interface is used by ECOM clients to connect their external event consumers to EEP and to control the event flow to those consumers. A concrete class that implements this interface has behavior to construct a client specific event transport architecture and to transport events. Its methods are:
- ***connect() -*** Connect the provided client event consumer to this supplier. Once this call is made, the supplier will send events to the Consumer by way of the client specific event transport architecture.

### IGemSupplierFactory (1060)

An interface (**1060**) for creating ***IGemSupplier*** objects. It has the same purpose, and methods, as ***IECOM_SupplierFactory*** except it is for the GEM specific client type. However, the concrete implementation of this interface is specific to the GEM client.

### IGemSupplier (1070)

An interface (**1070**) used for the specific GEM event clients to connect their external event consumers and receive and control events to that consumer. It has a similar function to that of ***IECOM_Supplier,*** but a different interface to support the different client.

### Exemplary Application Behavior

This section describes, using various diagrams to include flowcharts, how the exemplary application behaves to achieve its functionality.

### Overview (1100)

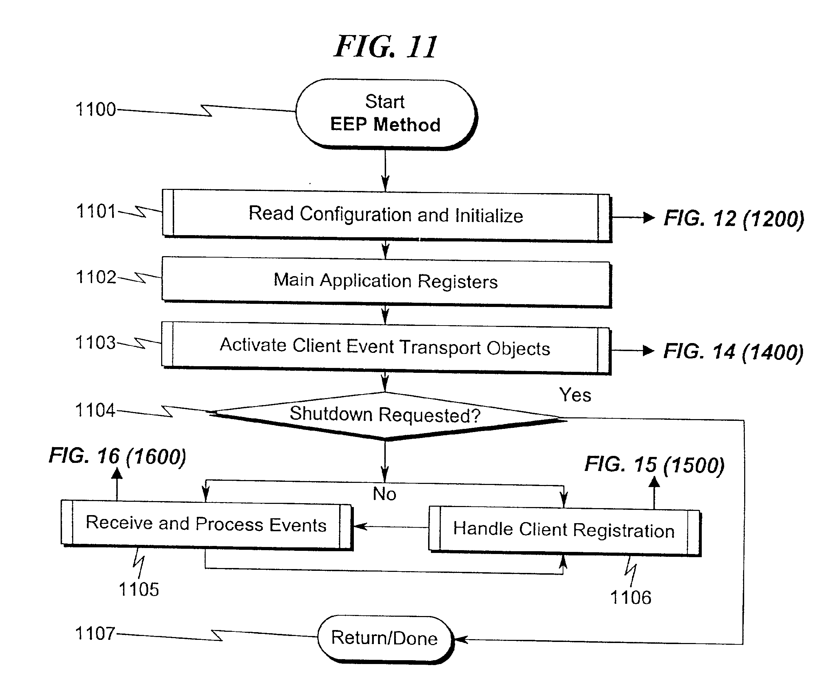

FIG. 11 (**1100**) illustrates an exemplary logical flow of the entire EEP application. The exemplary application is started by computer specific means; one skilled in the art is familiar with many ways to do this. It then reads its configuration and initializes its internal modules (**1101**). The application waits for the GEM Server to register with it (**1102**). Once this is done, the EEP constructs and activates client specific event transport mechanisms (**1103**). If activated by means of an external shutdown operation (**1104**), the application will exit. After activation of client specific event transport mechanisms (1103) is completed, the EEP can process and receive events from the GEM Server (**1105**) as well as handle event client registration requests (**1106**). Each node is explained in more detail in the subsequent figures.

### Read and Initialize (1200)

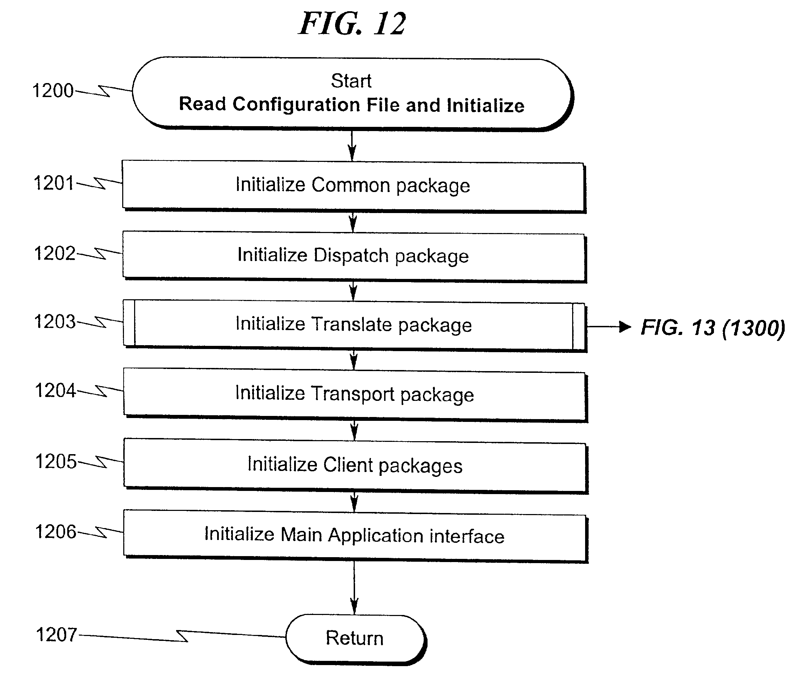

FIG. 12 (**1200**) describes the logical flow of reading the configuration and initializing the internal modules of the exemplary application. The different architectural modules from FIG. 4 (**0410**) are initialized in a specific order (**1202, 1203, 1204, 1205, and 1206**).

### Common Module (1201)

The initialization of the common module (**1201**) results in the creation and availability of all the common objects used by all the other modules. As part of the initialization of this module, the exemplary application creates its internal configuration data by reading configuration files and command line options.

### Dispatch Module (1202)

The dispatch module initialization (**1202**) is done by the ***EEPServer::setupDispatch*** operation. An ***IEventDispatcher*** *is* created for events received by the GEM Server. It is called the MainAppDispatcher (**0401**). A single ***IEventDispatcher*** is also created for each specific event client type (**0404**) that EEP supports. In this case, three are created for the GEM, ECOM and ALMAP event client types. Each one is named for the specific client type it supports: **ECOM_EventDispatcher, GemEventDispatcher, AlmapEventDispatcher.** Each ***IEventDispatcher*** is configured as needed for the specific event client.

### Translate Module (1203, 1300)

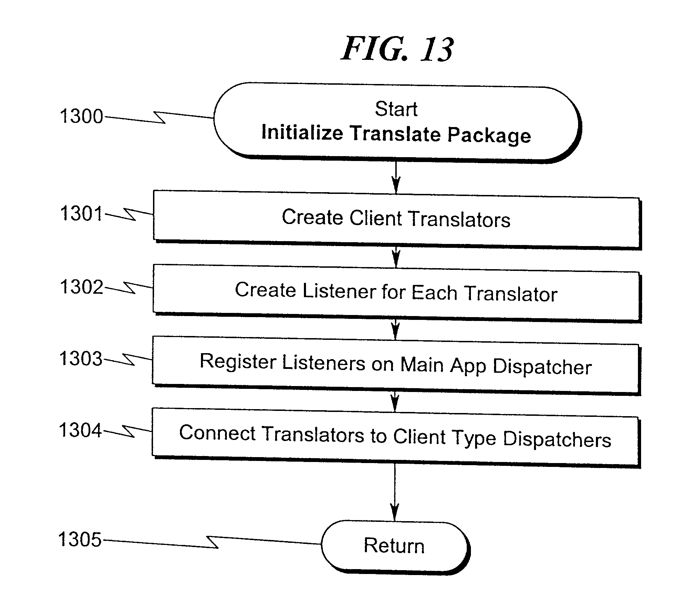

The translate module is initialized (**1203**) by the ***EEPServer:setupTranslate*** operation. This process is shown in more detail in FIG. 13 (**1300**). An *IEventTranslator* is created for each specific event client type (**1301**). In the case of an exemplary application, an ***ECOM_EventTranslator, GemEventTranslator*** and ***NullEventTranslator*** are created for the specific ECOM, GEM and ALMAP client types. An ***IEventListener*** is created for each ***IEventTranslator*** (**1302**). Each ***IEventTranslator*** is connected (**1303**) via the ***IEventListener*** to the MainAppDispatcher (**0401**). In this way, any events received by the GEM server are sent to each translator. Each (**0403**) ***IEventTranslator*** finds its corresponding client specific (**0404**) ***IEventDispatcher*** from objects in the common module and connects to them (**1304**). This allows the output of the translators to be dispatched to client specific dispatchers.

### Transport Module (1204)

The transport initialization (**1204**) is carried out by the ***EventTransport::init*** operation. The behavior of this method is provided in the description of (**1001**).

### Client Modules (1205)

The Client packages are initialized (**1205**) for each specific event client type. The management classes for each client module have an ***init*** operation that is called. The behavior of this operation is described in each client specific module (**0810, 0720**).

### Main Application Interface (1206)

The interface for the GEM server is initialized (**1206**) by the ***EEPServer::setupGemServer*** operation. This operation creates an instance of the ***EventProcessorImpl*** object and publishes it in a location that can be found by the GEM Server when it starts.

### Main Application Registers (1102)

The GEM Server finds its public interface to the EEP, the ***EventProcessor,*** in the location published by the EEP in the initialization step (**1206**). It calls the ***EventProcessorlmpl::register_EML*** and ***register_NE*** operations as needed. Due to the specific needs of the ECOM client type, these operations trigger the creation of the ECOM interfaces (**0710, 0730**). These in turn result in the creation of instances of (**1040**) and (**1050**) which establishes the complete event transport mechanisms for the ECOM event client type.

### Activate Client Transport (1400)

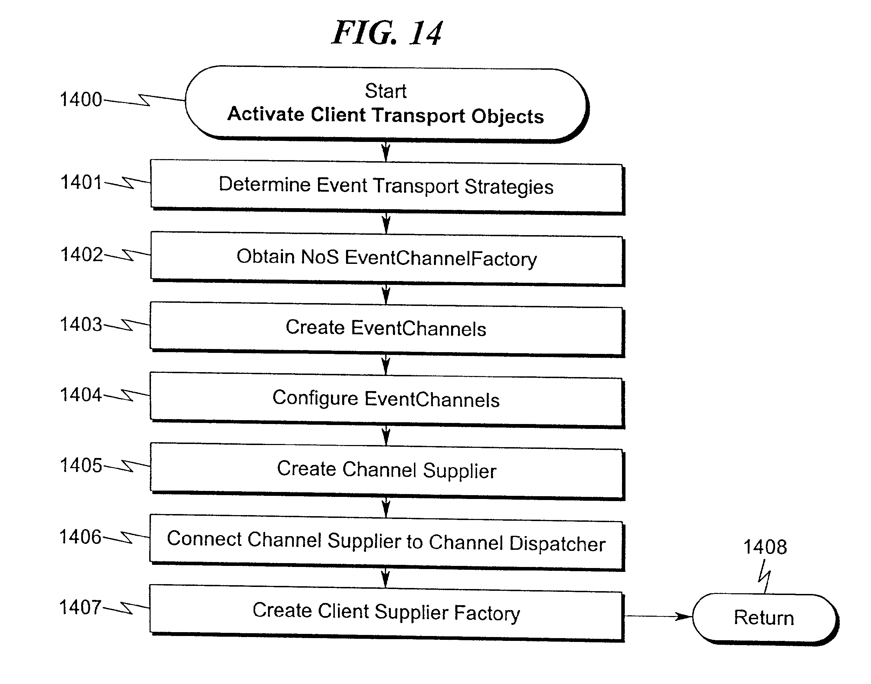

FIG. 14 (**1400**) describes the steps that activate the event transport mechanisms for each client. Although the event transport details are different for each event client type, the overall process is general.

Based upon configuration data established in (**1101**), the specific strategy for event transport for a specific client is selected (**1401**). A strategy is the configuration of an Event Channel, event filters and other objects that efficiently transport the event to the target client in the manner required.

The EventChannelFactory for the Notification Service (**0360**) is found (**1402**). This factory is used to create Event Channels. Finding the factory is done using typical CORBA mechanisms of which one that is skilled in the art is aware.

With the factory, one or more Event Channels are created (**1403**). The newly created Event Channel is configured (**1404**) based upon the selected strategy and supplied configuration data.

A Notification Service Event Supplier is created (**1405**) that will provide events to the Event Channel from the EEP. This event supplier is connected to the Event Channel using the procedure described in the CORBA Standard Services documentation.

The newly created Channel Event Supplier (**0406**) is connected to the specific client dispatcher (**1406**). This is a client specific instance (**0404**) of ***IEventDispatcher*** that was created during initialization of the dispatch module (**1202**). The Channel Event Supplier is connected to the dispatcher via an instance (**0405**) of ***IEventListener.*** This establishes the event flow within the EEP from the receipt of events from the GEM Server to the Event Channel to be used for the specific event client.

Finally, the appropriate instance of an ***ISupplierFactory*** (**1030**) is created (**1407**). The specific type is a function of which event client is being activated. The Factory is associated with the newly created Event Channel. When clients register, EEP will use the Factory to create Supplier proxies on the Event Channel and return these to the client. With this final step, the internal event transport architecture for a specific event client is fully activated and can support registration of clients and transport of events.

### Handle Client Registration (1500)

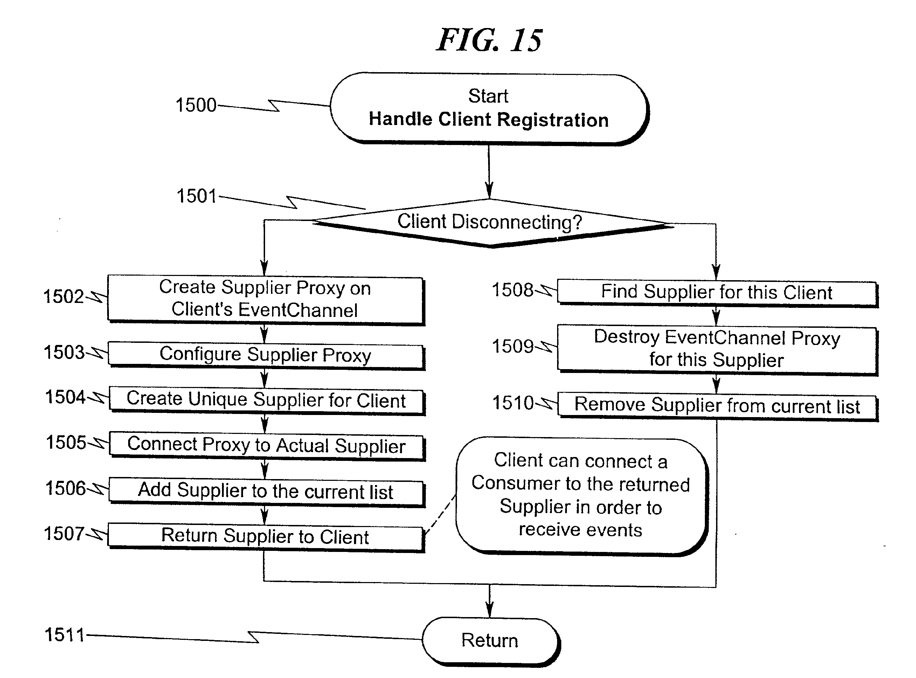

FIG. 15 (**1500**) describes the steps that EEP performs upon registration by any event client. Although the actual interface and functions used are specific to which event client is registering, the internal process is general.

The term 'registration' actually covers two cases. The first case is where the event client is attempting to connect to receive events. The second case is where an already connected event client is attempting to disconnect so that it no longer receives events.

### Connecting Client

For a connecting event client (**1501**), the first step (**1502**) is to create a new Supplier Proxy on the Event Channel used for this specific client. This is done using the standard Notification Service methods. Once the Supplier Proxy is created, it is configured (**1503**) based upon the needs of the specific event client and the configuration of the EEP itself.

Next, an event client specific event supplier is created (**1504**) within the appropriate client module (**0700, 0800,** etc.). Depending upon the event client, this might be an instance of ***GemPushSupplierImpl*** (**0840**), ***EventSupplierImpl*** (**0730**) or other. The client specific instance of ***ISupplierFactory*** (**1030**), created during (**1407**) activation, is used for this purpose. The event supplier is the event client specific interface that the client expects to use for connecting for events and controlling the event flow.

The newly created event supplier is then connected to the Supplier Proxy (**1505**). This connection enables the event supplier for the client to send requests for connecting and controlling event flow to the actual Supplier Proxy that will do the real work. The event supplier acts as an Adapter between the specific event client's interface requirements and those available from the Notification Service.

The new event supplier is added to the list of current suppliers for this type of client (**1506**). This list is maintained so that event clients can later disconnect if needed. Finally, the event supplier is returned to the client (**1507**). This allows the client to use the event supplier to actually connect to receive events and to control the event flow to the client. Each client uses a client specific process and set of functions to do this that is not shown.

### Disconnecting Client

A disconnecting client (**1501**) has already connected for events. The event supplier for the specific event client is found (**1508**) from the event supplier list. The Supplier Proxy for this event supplier, which is connected to the client specific Event Channel, is destroyed (**1509**). This permanently stops events from going to the specific event client while allowing for future connecting clients. The event supplier is removed from the list (**1510**) to indicate that the specific event client has disconnected.

### Receive and Process Events (1600)

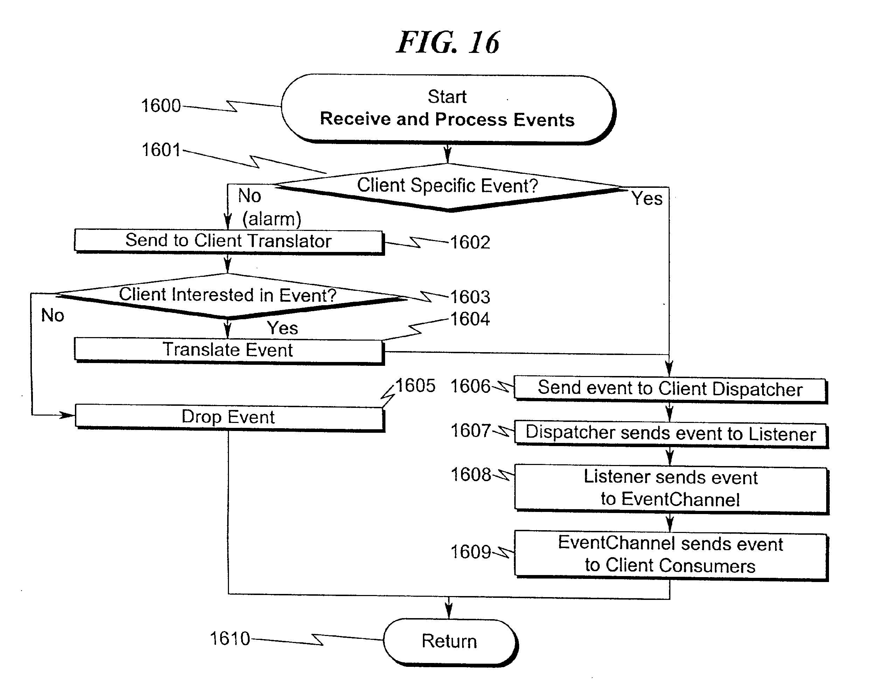

FIG. 16 (**1600**) describes the steps that EEP performs when it receives an event from the GEM Server and needs to transport it to registered event clients. The GEM Server sends events to the ***EventProcessorImpl*** (**0520**) to start this process. FIG 4 (0400) shows the flow of the events between objects inside the EEP as a result of these steps.

### Examining Event

The event is examined to determine whether it is an event that is specific to an event client type (**1601**). The GEM Server may choose to send events that are specifically for an individual event client type, such as ECOM. If the event is client specific it is sent to the appropriate Client Dispatcher (**0404**). Otherwise it is sent to the MainAppDispatcher (**0401**).

### Translation

Events sent to the MainAppDispatcher (**0401**) are subsequently sent to each ClientTranslatorListener (**0402**). These listeners ensure that the event is sent (**1602**) to each Client Translator (**0403**). Each translator determines whether the event is of interest to its specific event client type (**1603**). Each event client has different criteria for which events it wants to receive. If the client is not interested in the event (**1603**), it is dropped (**1605**) without further processing. If the client is interested in the event, it is translated (**1604**) from the form generated by the GEM Server to the form required by the specific event client. The translated event is then sent to the corresponding Client Dispatcher (**0404**).

### Dispatching

All events to be sent to a specific event client type are sent (**1601**) to the appropriate Client Dispatcher (**1606**) using the ***IEventDispatcher:dispatch*** operation. The Client Dispatcher sends (**1607**) the event to every registered ***IEventListener,*** one of which is the ClientChannelListener (**0405**). This listener sends the received event to the client specific Event Channel (**1608**) by way of the ChannelSupplier (**0406**). Once the Event Channel receives the event, the channel sends it to all event client consumers (**1609**) that have registered (**1106**). In this fashion, the event sent from the GEM Server is translated and sent to the appropriate client in the manner required by the client.

### Object Model for Dispatchers (0400)

FIG. 4 (**0400**) illustrates the relationships between objects internal to the EEP that provide for transporting received events to their ultimate destination. Each object with the suffix 'Dispatcher' is an instance of ***IEventDispatcher*.** Similarly, each object with the suffix 'Listener' is an instance of ***IEventListener.*** The Client Translator objects are instances of ***IEventTranslator.***

The MainAppDispatcher (**0401**) has a number of listeners, one for every ClientTranslator (**0402**). These listeners receive events from the MainAppDispatcher (**0401**) and forward them on to their respective translator. The translator performs its function (**1602, 1604, 1605**) and sends the event to the ClientDispatcher (**0404**) of which there is one per event client type. The ClientDispatcher (**0404**) processes the event in the manner described in (**1600**).

### Preferred System Context of the Present Invention

While the present invention may be best applied to situations in which telecommunications networks are to be managed and maintained either locally or remotely using graphical user interface (GUI) based operator consoles, the present invention also has wide applicability in situations in which any type of hardware and/or software component in a computer network is to be managed in a uniform way with minimal software design complexity and maintenance costs.

The functional elements of the present invention are widely applicable to situations involving multiple types of remote equipment sourced from a variety of hardware and software manufacturers. Since the present invention breaks the compile-time link between network element management and the tool used to perform the management function, this permits a wide variety of applications in situations where networks must be grown dynamically by adding hardware and software, but which must remain up and functional during this upgrade process.

### Conclusion

An **External Event Processor (EEP)** system and method incorporating a separate software component that permits reformatting of received events and transportation of these events to previously registered event consumers has been disclosed. The present invention teaches creation of a separate software component to handle event processing and transportation, running within a separate software process. This separate software process has a remote interface utilized by a Network Management application to send events in their most basic form to the External Event Processor (EEP). Subsequently, the EEP performs all other functions that are necessary to convert the supplied even to the proper form and type required by the external event consumers. In addition, the EEP provides the event with Quality of Service (QoS) properties required by external consumers.

Although a preferred embodiment of the present invention has been illustrated in the accompanying Drawings and described in the foregoing Detailed Description, it will be understood that the invention is not limited to the embodiments disclosed, but is capable of numerous rearrangements, modifications, and substitutions without departing from the spirit of the invention as set forth and defined by the following claims.

## Claims

1. An external event processor (EEP) system comprising:
(a) one or more event suppliers;
(b) one or more event consumers;
(c) one or more notification channel means; and
(d) an external event processor software subsystem means;
wherein
said external event processor software subsystem means translates events between said event suppliers and said event consumers;
said external event processor software subsystem means has an external interface to receive events from said event suppliers through a main software application;
said external event processor software subsystem means may receive events from one or more network elements via said external interface.

2. The external event processor (EEP) system of Claim 0 further comprising:
(a) MainAppDispatcher means;
(b) ClientTranslatorListener means;
(c) ClientListener means;
(d) ClientDispatcher means;
(e) ClientChannelListener means; and
(f) ChannelSupplier means;
wherein
said events are processed sequentially through said means (a)-(f).

3. The external event processor (EEP) system of Claim 0 further comprising:
(a) EEP::app means;
(b) EEP::util means;
(c) EEP::common means;
(d) EEP::client means;
(e) EEP::server means;
(f) EEP::transport means; and
(g) EEP:dispatch means.

4. The external event processor (EEP) system of Claim 0 wherein said event suppliers and event consumers reside on separate nodes within a computer network.

5. The external event processor (EEP) system of Claim 0 wherein one or more components of said system is implemented within an application programming interface (API).

6. The external event processor (EEP) system of Claim 0 wherein said transport occurs over the Internet.

7. The external event processor (EEP) system of Claim 0 wherein one or more components of said system is implemented on a personal computer (PC).

8. The external event processor (EEP) system of Claim -1 wherein said personal computer utilizes a HP-UX™ operating environment.

9. The external event processor (EEP) system of Claim -2 wherein said personal computer utilizes a LINUX™ operating environment.

10. The external event processor (EEP) system of Claim -3 wherein said personal computer utilizes a SOLARIS™ operating environment.

11. The external event processor (EEP) system of Claim -4 wherein said personal computer utilizes a UNIX™ operating environment.

12. The external event processor (EEP) system of Claim -5 wherein said personal computer utilizes a Microsoft® Windows™ operating environment.

13. An external event processor (EEP) method comprising:
(1) receiving an event from a network element or other event supplier;
(2) transferring said event to an external event processor (EEP) software component via an external interface;
(3) translating said event into a form suitable for interpretation by an event consumer;
(4) transmitting said translated event to an event consumer.
wherein
said events are transferred from said event suppliers to said event consumers through one or more event channels.

14. The external event processor (EEP) method of Claim 0 further comprising sequential processing said event through:
(a) MainAppDispatcher means;
(b) ClientTranslatorListener means;
(c) ClientListener means;
(d) ClientDispatcher means;
(e) ClientChannelListener means; and
(f) ChannelSupplier means.

15. The external event processor (EEP) method of Claim 0 further comprising processing of said event by:
(a) EEP::app means;
(b) EEP::util means;
(c) EEP::common means;
(d) EEP::client means;
(e) EEP::server means;
(f) EEP::transport means; and
(g) EEP:dispatch means.

16. The external event processor (EEP) method of Claim 0 wherein said event suppliers and event consumers reside on separate nodes within a computer network.

17. The external event processor (EEP) method of Claim 0 wherein one or more steps of said method is implemented within an application programming interface (API).

18. The external event processor (EEP) method of Claim 0 wherein said transport occurs over the Internet.

19. The external event processor (EEP) method of Claim 0 wherein one or more steps of said method is implemented on a personal computer (PC).

20. The external event processor (EEP) method of Claim -1 wherein said personal computer utilizes a HP-UX™ operating environment.

21. The external event processor (EEP) method of Claim -2 wherein said personal computer utilizes a LINUX™ operating environment.

22. The external event processor (EEP) method of Claim -3 wherein said personal computer utilizes a SOLARIS™ operating environment.

23. The external event processor (EEP) method of Claim -4 wherein said personal computer utilizes a UNIX™ operating environment.

24. The external event processor (EEP) method of Claim -5 wherein said personal computer utilizes a Microsoft® Windows™ operating environment.

25. An external event processor (EEP) encoded propagated signal data stream constructed using
(5) one or more event suppliers;
(6) one or more event consumers;
(7) a communications network;
(8) encoded event signaling data; and
(9) an external event processor (EEP) means;
wherein
said external event processor means translates event information between said event suppliers and event consumers over said communications network via an external interface to a main software application that pushes event data to said EEP through said external interface;
said translation occurs via encoding of event information from said event suppliers to said event consumers via said communication channel.

26. A computer usable medium having computer-readable program code means providing external event processor (EEP) functionality, said computer-readable program means comprising:
(10) computer program code means for receiving an event from a network element or other event supplier;
(11) computer program code means for transferring said event to an external event processor (EEP) software component via an external interface;
(12) computer program code means for translating said event into a form suitable for interpretation by an event consumer;
(13) computer program code means for transmitting said translated event to an event consumer.
wherein
said events are transferred from said event suppliers to said event consumers through one or more event channels.

27. The computer usable medium of Claim 0 wherein said events are sequentially processed through:
(a) MainAppDispatcher computer program code means;
(b) ClientTranslatorListener computer program code means;
(c) ClientListener computer program code means;
(d) ClientDispatcher computer program code means;
(e) ClientChannelListener computer program code means; and
(f) ChannelSupplier computer program code means.

28. The computer usable medium of Claim 0 further comprising processing of said event by:
(a) EEP::app computer program code means;
(b) EEP::util computer program code means;
(c) EEP::common computer program code means;
(d) EEP::client computer program code means;
(e) EEP::server computer program code means;
(f) EEP::transport computer program code means; and
(g) EEP:dispatch computer program code means.

29. The computer usable medium of Claim 0 wherein said event suppliers and event consumers reside on separate nodes within a computer network.

30. The computer usable medium of Claim 0 wherein one or more steps of said functionality is implemented within an application programming interface (API).

31. The computer usable medium of Claim 0 wherein said transport occurs over the Internet.

32. The computer usable medium of Claim 0 wherein said medium is compatible with a personal computer (PC).

33. The computer usable medium of Claim -1 wherein said personal computer utilizes a HP-UX™ operating environment.

34. The computer usable medium of Claim -2 wherein said personal computer utilizes a LINUX™ operating environment.

35. The computer usable medium of Claim -3 wherein said personal computer utilizes a SOLARIS™ operating environment.

36. The computer usable medium of Claim -4 wherein said personal computer utilizes a UNIX™ operating environment.

37. The computer usable medium of Claim -5 wherein said personal computer utilizes a Microsoft® Windows™ operating environment.
